(19) **Europäisches Patentamt / European Patent Office / Office européen des brevets**

(11) **EP 1 792 106 B1**

(12) **FASCICULE DE BREVET EUROPEEN**

(45) Date de publication et mention de la délivrance du brevet:
**17.11.2010 Bulletin 2010/46**

(21) Numéro de dépôt: **05798979.0**

(22) Date de dépôt: **06.09.2005**

(51) Int Cl.:
*F16H 61/20* (2006.01)

(86) Numéro de dépôt international:
**PCT/FR2005/050711**

(87) Numéro de publication internationale:
**WO 2006/030145 (23.03.2006 Gazette 2006/12)**

(54) **PROCEDE DE COMMANDE A PLUSIEURS MODES DE FONCTIONNEMENT D'UNE TRANSMISSION AUTOMATISEE POUR VEHICULE AUTOMOBILE, NOTAMMENT POUR UN AVANCEMENT AU RALENTI DU VEHICULE AUTOMOBILE SANS ACTIVATION DU FREIN DU VEHICULE AUTOMOBILE, ET DISPOSITIF CORRESPONDANT**

VERFAHREN ZUR STEUERUNG IM MULTIBEDIENUNGSMODUS EINES AUTOMATIKGETRIEBES FÜR EIN KRAFTFAHRZEUG, BESONDERS FÜR LEERLAUFBETRIEB MIT NICHTANGEZOGENER BREMSE UND DAZUGEHÖRIGE VORRICHTUNG

METHOD FOR MULTI-OPERATING MODE CONTROL OF AN AUTOMATED TRANSMISSION FOR A MOTOR VEHICLE, IN PARTICULAR FOR IDLE SPEED RUNNING WITH INACTIVATED BRAKE AND CORRESPONDING DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.09.2004 FR 0409652**

(43) Date de publication de la demande:
**06.06.2007 Bulletin 2007/23**

(73) Titulaire: **RENAULT S.A.S.**
**92100 Boulogne Billancourt (FR)**

(72) Inventeurs:
- **ROUDEAU, Frédéric**
  **F-94400 VITRY SUR SEINE (FR)**
- **BRETHEAU, Jean**
  **F-92160 ANTONY (FR)**
- **VERMUSE, Vincent**
  **F-91180 ST GERMAIN LES ARPAJONS (FR)**

(56) Documents cités:
**EP-A- 1 241 064       EP-A- 1 275 551**
**EP-A- 1 342 607       FR-A- 2 839 927**
**US-A1- 2004 143 384**

EP 1 792 106 B1

**Description**

La présente invention concerne le contrôle du mode de fonctionnement d'un groupe motopropulseur équipé d'une transmission automatisée d'un véhicule automobile.

Ce dispositif de contrôle s'applique avantageusement à des transmissions automatisées, notamment les boîtes à commande impulsionnelle dites « BCI », les boîtes à commande automatique dites « BVA » et les boîtes de vitesse robotisées dites « BVR », mais aussi les transmissions à rapport continu, telles que les CVT (« continuous variable transmission » en langue anglaise), les IVT (« infinitely variable transmission » en langue anglaise) et les transmissions hybrides.

Une transmission comporte classiquement un bloc de commande recevant un ou plusieurs paramètres d'entrée interprétant la volonté du conducteur. Puis, en fonction de la valeur de ces paramètres, ce bloc de commande délivre une consigne de commande en vue d'une application aux roues du véhicule automobile.

Une évolution d'un tel bloc de commande a déjà été décrite dans le document FR-A-2827339, au nom de la Demanderesse. Ce document détaille un dispositif de contrôle du point de fonctionnement d'un groupe motopropulseur. Le contrôle réalisé par ce dispositif est un contrôle en couple à appliquer aux roues du véhicule automobile. Tel que défini dans le document FR-A-2827339, la valeur du couple à appliquer aux roues du véhicule automobile, est calculée directement au niveau des roues du véhicule automobile.

Le dispositif du document FR-A-2827339 possède un module d'interprétation de la volonté du conducteur appelé « module IVC ». Le module IVC génère une consigne de couple à appliquer aux roues, à destination d'un bloc d'optimisation du point de fonctionnement OPF. Ce dernier transmet ledit couple en vue d'un contrôle en couple à appliquer aux roues du véhicule automobile. Le bloc OPF génère simultanément une consigne de régime moteur à partir dudit couple à appliquer aux roues du véhicule automobile. On détermine cette consigne de couple en fonction de la volonté du conducteur, des caractéristiques du véhicule automobile et de son environnement.

Cependant, dans le cas d'une transmission automatisée, il existe des modes spécifiques tels que le mode « Rampage » et le mode « Neutre », liés à la transmission automatisée et que l'on ne retrouve pas dans le cas d'une transmission mécanique. Le mode « Rampage » correspond à un avancement au ralenti du véhicule automobile, lorsque le levier de vitesses est en position dite « Drive » ou « D ». Le mode « Neutre » correspond à un avancement en roue libre du véhicule lorsque le levier de commande est en position dite « Neutre » ou « N ».

Le module d'interprétation de la volonté du conducteur du document FR-A-2827339 ne prend pas en compte ces modes de fonctionnement particuliers, notamment dans le cas où le véhicule automobile avance au pas en ayant des contraintes de charge ou de pente, par exemple. Dans cette configuration, il est particulièrement important d'amener progressivement le véhicule automobile à une vitesse constante, et maintenir cette vitesse constante indépendamment de la charge et de la pente de la route.

Dans le cas où le frein du véhicule automobile est activé, on se trouve dans un mode dit « Rampage en Couple ». L'objectif est alors d'assurer une consigne suffisante pour empêcher le véhicule automobile de reculer. Il est en outre conçu pour contrôler le véhicule automobile, en fonction de l'enfoncement de la pédale de frein exercé par le conducteur et de la vitesse du véhicule automobile.

Dans le cas où le frein du véhicule automobile n'est pas activé, et que le but est de maintenir une vitesse constante et faible, on se trouve dans un mode dit « Rampage en Vitesse». L'objectif est alors de suivre la consigne de vitesse indépendamment de la pente de la route et/ou de la charge. Ce mode est particulièrement adapté au suivi de file par exemple.

On connaît pour ce mode de fonctionnement, par le document US 5,549,525 (ZF), un dispositif qui empêche le véhicule automobile de reculer lorsqu'il avance au pas sur un plan incliné. Pour ce faire, le dispositif prévoit un contrôle mais uniquement au niveau de la transmission.

On connaît également par le document US 4,961,146 au nom de MITSUBISHI un dispositif de contrôle d'un groupe motopropulseur d'un véhicule automobile afin d'assurer un mode « Rampage ». Plus précisément, ce contrôle s'effectue en faisant varier le degré d'ouverture du seul papillon des gaz du moteur thermique.

On connaît par le document US 2002/115529 au nom de NISSAN un procédé permettant d'assurer une fonction de « Rampage en Vitesse » dans le cas de véhicule automobile muni de transmission à rapport continu. Ce procédé consiste à faire varier continûment la consigne de rapport de boîte de la transmission du véhicule automobile.

On connaît par le document US 2003/01171186 au nom de HITACHI un procédé et son dispositif associé permettant d'assurer une fonction « Rampage en Vitesse ». Ce procédé consiste à générer une consigne de couple moteur destinée au moteur thermique du véhicule automobile et permettant de piloter le moteur thermique ainsi qu'un organe de transfert du couple tel qu'un convertisseur ou un embrayage.

Le document EP 1275551, correspondant au document FR 2 827 339, décrit l'élaboration de la composante dynamique de la consigne en cours d'application. Cependant, le dispositif décrit ne comprend pas de prise en compte de la composante dynamique de la consigne en cours d'application lors de la détermination du signal de consigne.

Le document US2004-143384 décrit un procédé de commande du train moteur d'un véhicule automobile. Cependant, cette méthode de commande ne comprend pas de prise en compte d'une composante dynamique du signal de consigne.

Un but de l'invention est de pallier les manques des différentes solutions décrites dans les demandes précitées afin de répondre au plus près à la volonté du conducteur, en particulier lorsque le véhicule automobile se trouve en mode « Rampage en Vitesse », c'est-à-dire lorsque le véhicule automobile avance au ralenti sans que le frein ne soit activé.

À cet effet, l'invention propose un procédé de commande d'une transmission automatisée d'un groupe motopropulseur pour un véhicule automobile, comprenant une étape d'élaboration d'un signal de consigne d'une variable appliquée aux roues du véhicule automobile, ladite consigne comprenant une composante dynamique et une composante statique élaborées en tenant compte de données d'entrée représentatives des caractéristiques du véhicule automobile, de la volonté du conducteur et de l'environnement du véhicule automobile. On sélectionne, en fonction desdites données d'entrée, un mode parmi au moins deux modes de fonctionnement différents, capables de délivrer ledit signal de consigne, l'un des deux modes de fonctionnement correspondant à un mode dit « Rampage en Vitesse » apte à délivrer ledit signal de consigne lorsque le véhicule automobile avance à une vitesse inférieure à un seuil prédéterminé et que la pédale de frein du véhicule automobile est inactivée, le mode « Rampage en vitesse » et/ou la valeur de consigne délivrée lorsque ledit mode; « Rampage en vitesse » est sélectionné, étant déterminés en fonction d'un signal représentatif de la composante dynamique de la consigne en cours d'application.

Le mode dit « Rampage en Vitesse » permet d'offrir un mode de conduite approprié au déplacement du véhicule automobile au ralenti, lorsque le conducteur n'active pas la pédale de frein. Ce mode de conduite va permettre notamment d'amener progressivement le véhicule automobile à une vitesse constante. Ce mode, particulièrement adapté au suivi de file, va permettre également de maintenir la vitesse constante indépendamment de la charge du véhicule automobile et de la pente de la route.

Selon un mode de mise en oeuvre, le mode « Rampage en vitesse » et/ou la valeur de la consigne délivrée lorsque ledit mode « Rampage en Vitesse » est sélectionné, sont déterminés en fonction d'un signal représentatif d'une vitesse mesurée, et/ou d'un signal représentatif d'une vitesse cible que le véhicule automobile doit atteindre.

Selon un mode de mise en oeuvre, le mode « Rampage en Vitesse » et/ou la valeur de la consigne délivrée lorsque ledit mode « Rampage en Vitesse » est sélectionné, sont déterminés en fonction d'un signal représentatif des couples résistants appliqués à la roue et que le véhicule automobile doit vaincre pour pouvoir se mettre en mouvement.

L'invention propose également un dispositif de commande d'une transmission automatisée d'un groupe motopropulseur pour un véhicule automobile, apte à délivrer des signaux de consigne d'une variable appliquée aux roues du véhicule automobile, ladite consigne comprenant une composante dynamique et une composante statique, élaborées en tenant compte de données d'entrée, délivrées par un bloc d'entrée et comprenant une liste de paramètres définissant les caractéristiques du véhicule automobile, la volonté du conducteur et l'environnement du véhicule automobile. Le dispositif de commande comprend :

- un bloc de commande comportant au moins deux modules selon deux modes de fonctionnement distincts et prédéterminés, l'un des modules correspondant à un mode dit « Rampage en Vitesse », sélectionné lorsque le véhicule automobile avance à une vitesse inférieure à un seuil prédéterminé et que la pédale de frein du véhicule automobile est inactivée,
- un module de sélection recevant les signaux provenant dudit bloc d'entrée et apte à délivrer un signal de sélection de l'un desdits modules en fonction des données d'entrée.

Selon un mode de réalisation, le module destiné au mode de fonctionnement dit « Rampage en Vitesse » comprend :

- un bloc de calcul apte à élaborer une consigne de vitesse à partir d'une vitesse mesurée du véhicule automobile, d'une consigne de vitesse cible que le véhicule automobile doit atteindre et d'un signal d'initialisation,
- des moyens de correction aptes à effectuer une correction proportionnelle et/ou intégrale et/ou dérivée sur la consigne de vitesse élaborée par le premier bloc, et à délivrer chacun une consigne de couple corrigée,
- des premiers moyens d'initialisation et d'adaptation de la consigne de vitesse devant être corrigée par le moyen de correction effectuant la correction intégrale, en fonction du signal d'initialisation et de la valeur d'une consigne dynamique de couple en cours d'application,
- un filtre apte à saturer et filtrer une consigne de couple dynamique brute en mode « Rampage en Vitesse » élaboré à partir des consignes de couple corrigées par les moyens de correction,
- des moyens pour effectuer des opérations sur les variables délivrées par les blocs compris dans le module destiné au mode de fonctionnement dit « Rampage en Vitesse »,
- des moyens pour délivrer la consigne de couple statique en mode « Rampage en Vitesse » à partir de la valeur de consigne de couple dynamique en mode « Rampage en Vitesse », une quantité minimale de couple à appliquer à la roue, et un signal représentatif des couples résistants appliqués à la roue et que le véhicule automobile doit vaincre pour pouvoir se mettre en mouvement,

Selon un mode de réalisation, le bloc de calcul comprend :

- un module correspondant au mode dit « Rampage en vitesse » apte à déterminer la valeur de consigne délivrée lorsque ledit mode « Rampage en vitesse » est sélectionné, en fonction de la composante dynamique de la consigne en cours d'application.
- des seconds moyens d'initialisation aptes à initialiser une variable intermédiaire avec la valeur de la vitesse mesurée du véhicule automobile ou la valeur de la consigne de vitesse élaborée par le bloc de calcul au pas de temps précédent,
- des moyens de saturation aptes à réduire l'écart entre la vitesse cible souhaitée par le conducteur et la variable intermédiaire,
- des moyens pour effectuer les opérations sur les variables délivrés par le bloc compris dans le bloc de calcul.

D'autres avantages et caractéristiques de l'invention apparaîtront à l'examen de la description détaillée d'un mode de mise en oeuvre nullement limitatif, et des dessins annexés, sur lesquels :

- la figure 1 illustre schématiquement un exemple de réalisation d'un dispositif selon l'invention,
- la figure 2 illustre schématiquement et plus en détail une partie de la figure 1,
- la figure 3 illustre schématiquement et plus en détail une partie de la figure 1,
- la figure 4 illustre un exemple des différentes étapes de fonctionnement lors de la sélection d'un mode de fonctionnement,
- la figure 5 illustre schématiquement et plus en détail un module du dispositif de la figure 1,
- la figure 6 illustre schématiquement et plus en détail un module du dispositif de la figure 5,
- la figure 7 représente des courbes de l'évolution des variables générées par des modules représentés sur les figures 1 à 6.

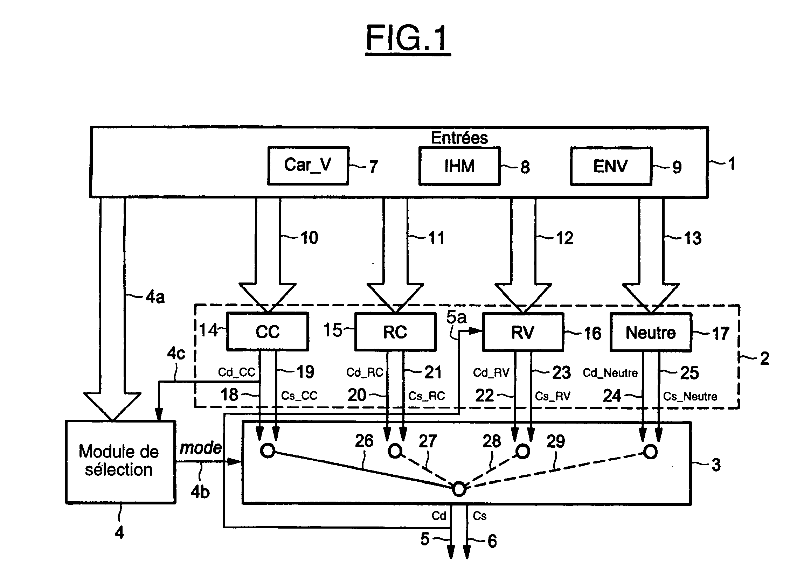

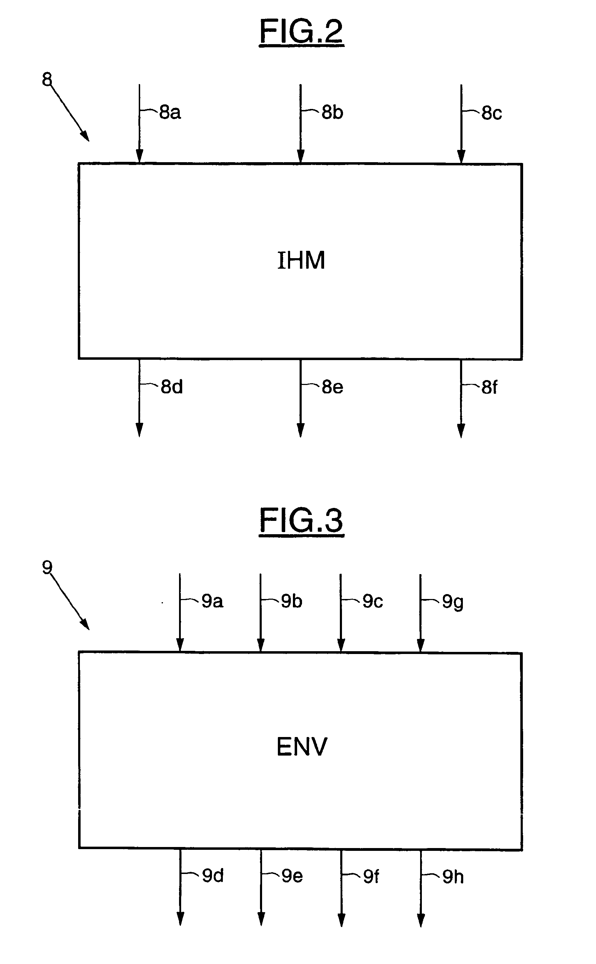

Sur la figure 1, on a représenté schématiquement un exemple d'un mode de réalisation du dispositif selon l'invention. Ce dispositif peut être inclus dans une boîte de commande pour une transmission automatisée de véhicule automobile, non représentée sur la figure.
Tel qu'il est illustré sur la figure 1, le dispositif de commande comprend un bloc d'entrée 1 transmettant des données d'entrée à un bloc de commande 2. Ce dernier délivre différentes consignes selon chaque mode de fonctionnement à un sélecteur 3. Un module de sélection 4 envoie, en fonction des données d'entrée délivrées par le bloc d'entrée 1 par la connexion 4a, un signal de commande « *mode* » au sélecteur 3 par la connexion 4b. Le sélecteur 3 sélectionne, parmi les différentes consignes délivrées par le bloc de commande 2, la consigne adaptée au signal de commande « *mode* » et délivre le signal de consigne. Ce signal comprend deux composantes, l'une statique Cs qui transite par la connexion 6 et l'autre dynamique Cd qui transite par la connexion 5.
La composante statique Cs dans l'exemple illustré, est la valeur maximale du couple applicable aux roues du véhicule automobile que pourrait demander le conducteur et que le groupe moto-propulseur doit rendre immédiatement disponible aux roues du véhicule automobile.
Dans d'autres variantes, les grandeurs élaborées par le dispositif peuvent être un effort ou une puissance.
Le bloc d'entrée 1 comprend trois modules 7, 8 et 9 qui vont élaborer un signal de données à partir des signaux issus de capteurs, non-représentés, intégrés dans le véhicule automobile.
Le module 7 est capable d'élaborer les données concernant les caractéristiques du véhicule automobile. Celles-ci sont programmées et mémorisées par le constructeur pour caractériser le comportement du véhicule automobile livré à un client.
Le module 8 est capable d'élaborer des données concernant la volonté du conducteur (Interface Homme/Machine, IHM). Ces données interprètent les souhaits que transmet le conducteur. En se référant à la figure 2 qui décrit plus précisément les données élaborées par le module 8, on note qu'il délivre des signaux tels qu'un signal transitant par la connexion 8d correspondant au levier de commande de la transmission du véhicule automobile transitant par la connexion 8a, un signal transitant par la connexion 8e correspondant au frein du véhicule automobile 8b ou encore un signal transitant par la connexion 8f représentatif de l'enfoncement de la pédale d'accélération du véhicule automobile 8c.
Le module 9 est capable d'élaborer des signaux concernant l'environnement du véhicule automobile. Ces derniers permettent de tenir compte de l'état du véhicule automobile et de sa situation dans l'environnement. En se référant à la figure 3 qui décrit plus précisément les données élaborées par le module 9, on note qu'il délivre des signaux tels qu'un signal transitant par la connexion 9d correspondant à la vitesse du véhicule automobile 9a, un signal transitant par la connexion 9e, représentatif de l'état de la chaussée 9b, un signal transitant par la connexion 9f est représentatif des conditions météorologiques 9c, un signal transitant par la connexion 9h, représentatif des couples résistants 9g appliqués à la roue et que le véhicule automobile doit vaincre pour pouvoir se mettre en mouvement.
La valeur des paramètres et l'état des variables des données d'entrée transmises par ces trois modules sont stockés dans une mémoire commune à chaque élément du dispositif, non représentée.
Le bloc de commande 2 possède quatre modules distincts chacun correspondant à un mode de fonctionnement particulier du véhicule automobile. Ces blocs de commande reçoivent toutes les données d'entrée du bloc d'entrée 1 par quatre connexions distinctes respectivement la connexion 10 pour le premier module 14 du bloc de commande 2, la connexion 11 pour le deuxième module 15, la connexion 12 pour le troisième module 16 et la connexion 13 pour le quatrième module 17.

Les quatre modules du bloc de commande 2 sont capables de délivrer un signal de consigne selon quatre modes différents que sont le mode « Contrôle Continu », le mode « Rampage en Vitesse », le mode « Rampage en Couple » et le mode « Neutre ».

En fonction des valeurs des paramètres d'entrée, on se retrouve dans une première configuration représentée sur la figure 1. Le mode choisi par le module de sélection 4 est le mode « contrôle continu » dit mode « CC » correspondant au module de mode de fonctionnement 14. Ce mode est utilisé lorsque la vitesse du véhicule automobile est supérieure à un certain seuil prédéterminé. Par ailleurs, il est nécessaire que le module du mode de fonctionnement « Contrôle Continu » génère continûment sa consigne aux roues du véhicule automobile même lorsqu'il n'est pas choisi par le module de sélection 4, car la valeur de la consigne dynamique en mode « Contrôle Continu », sert de valeur de référence au module de sélection 4 auquel elle est transmise par la connexion 4c. À titre d'exemple, on peut se référer au document FR-A-282 733 9, ce mode « Contrôle Continu » se rapporte au module d'interprétation de la volonté du conducteur, IVC. Le mode « CC » est apte à générer une consigne dynamique « Cd_CC » et une consigne statique « Cs_CC » respectivement transmises par une première entrée du sélecteur 3 par les connexions 18 et 19. Dans cette configuration où le mode « CC » est choisi, le sélecteur 3 sélectionne alors la première entrée en établissant une connexion 26 entre sa première entrée et sa sortie. Le sélecteur 3 peut alors délivrer les consignes statique et dynamique Cs et Cd correspondant respectivement aux consignes « Cs_CC » et « Cd_CC ».

En fonction des valeurs des paramètres d'entrée, on peut se retrouver dans une seconde configuration. Le mode choisi par le module de sélection 4 est le mode « Rampage en Couple » dit mode « RC » correspondant au module de mode de fonctionnement 15 et qui est un mode supplémentaire par rapport au document FR-A-2827339. Le mode « RC » est activé lorsque le véhicule automobile avance au ralenti avec le frein activé. Il permet de générer une consigne dynamique « Cd_RC » et une consigne statique « Cs_RC » respectivement transmises par les connexions 20 et 21 à une deuxième entrée du sélecteur 3. Ce procédé d'élaboration sera décrit plus en détail ci-après. Dans la configuration où le mode « RC » est choisi, le sélecteur 3 sélectionne ladite deuxième entrée en établissant une connexion 27 entre sa deuxième entrée et sa sortie. Le sélecteur 3 peut alors délivrer les consignes statique et dynamique Cs et Cd correspondant respectivement aux consignes « Cs_RC » et « Cd_RC ».

En fonction des valeurs des paramètres d'entrée, on peut se retrouver dans une troisième configuration. Le mode choisi par le module de sélection 4 est le mode « Rampage en Vitesse » dit mode « RV » correspondant au module de mode de fonctionnement 16 et qui est également un mode supplémentaire par rapport au document FR-A-2827339. Le mode « RV » est activé lorsque le véhicule automobile avance au ralenti avec le frein inactif. Il permet de générer une consigne dynamique « Cd_RV » et une consigne statique « Cs_ RV » respectivement transmises par les connexions 22 et 23 à une troisième entrée du sélecteur 3. En outre, la consigne dynamique Cd en cours d'application est transmise par la connexion 5a au module 16 afin d'élaborer une nouvelle consigne dynamique. Dans cette configuration, le mode « RV » est choisi, le sélecteur 3 sélectionne ladite troisième entrée en établissant une connexion 28 entre sa troisième entrée et sa sortie. Le sélecteur 3 peut alors délivrer les consignes statique et dynamique Cs et Cd correspondant respectivement aux consignes « Cs_ RV » et « Cd_RV ».

En fonction des valeurs des paramètres d'entrée, on peut se retrouver dans une quatrième configuration. Le mode choisi par le module de sélection 4 est le mode « Neutre » correspondant au module de mode de fonctionnement 17 et qui est également un mode supplémentaire par rapport au document FR-A-2827339. Le mode « Neutre » est activé lorsque le levier de commande de la transmission automatisée est en position « Parking » dite « P », c'est-à-dire en position de verrouillage, ou en position « Neutre » dite « N », c'est-à-dire lorsque le véhicule automobile est en roue libre. Il permet de générer une consigne dynamique « Cd_ Neutre » et une consigne statique « Cs_Neutre » respectivement transmises par les connexions 24 et 25 à une quatrième entrée du sélecteur 3. Dans cette configuration où le mode « Neutre » est choisi, le sélecteur 3 sélectionne ladite quatrième entrée en établissant une connexion 29 entre sa quatrième entrée et sa sortie. Le sélecteur 3 peut alors délivrer les consignes statique et dynamique Cs et Cd correspondant respectivement aux consignes « Cs_Neutre » et « Cd_Neutre ».

Les modules de mode de fonctionnement non sélectionnés sont capables de générer une consigne par défaut, cependant selon une variante de l'invention, ils pourraient également ne générer une consigne que s'ils étaient sélectionnés, excepté le module 14 du mode « Contrôle Continu » qui doit délivrer une consigne dans tous les cas.

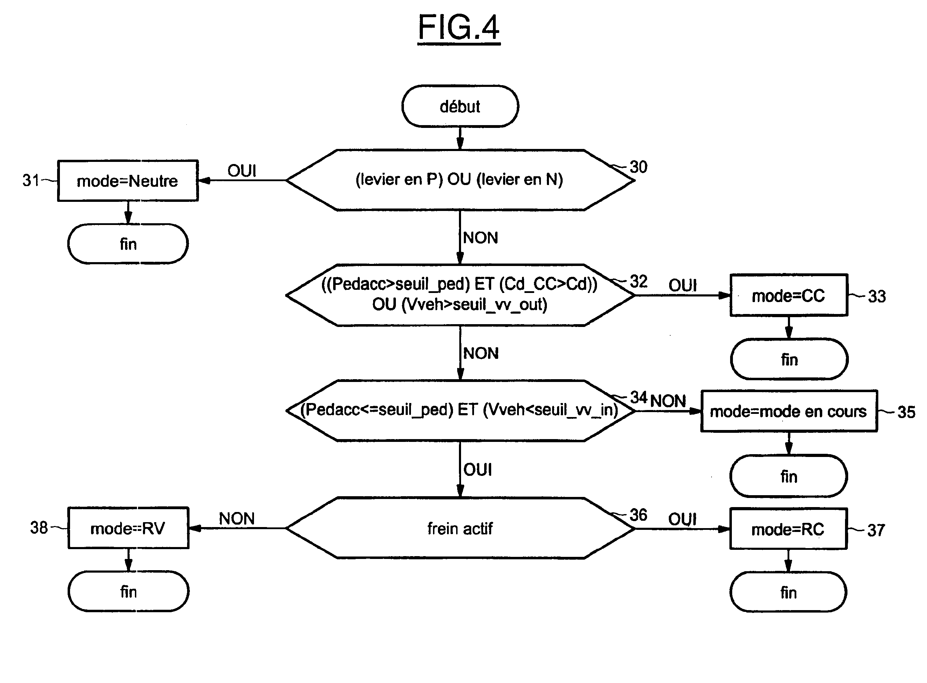

La figure 4 illustre le fonctionnement du module de sélection 4 lors du choix du mode de fonctionnement.

Tout d'abord, le module de sélection 4 adopte un mode de fonctionnement séquentiel. La remise à jour de la valeur des paramètres d'entrée est effectuée périodiquement. À titre d'exemple, elle peut se faire toutes les 20 ms (50 Hz).

L'organigramme représenté sur la figure 4, montre les différents tests d'analyse et de comparaison réalisés sur les données élaborées par le bloc d'entrée 1 et transmises par la connexion 4a. Ces tests sont réalisés par différents moyens de comparaison selon le processus suivant.

À chaque rafraîchissement, une première étape 30 consiste à vérifier l'état du levier de commande. Si celui-ci est en position dite « Parking » ou « P », ou dite « Neutre » ou « N » ((*levier en P OU levier en N*), alors on choisit le mode Neutre 31.

Si le levier de commande du véhicule automobile n'est ni dans la position « Parking » ni dans la position « Neutre », le module de sélection passe à une étape 32 et vérifie l'enfoncement de la pédale d'accélération *Pedacc,* la valeur de la composante dynamique de la consigne actuelle Cd et la vitesse du véhicule automobile *Vveh.*

Pour valider cette étape 32, soit l'enfoncement de la pédale d'accélération du véhicule automobile est strictement supérieur à un seuil prédéterminé d'enfoncement de la pédale d'accélération et, simultanément, la composante dynamique de la consigne actuelle est strictement inférieure à la composante dynamique de la consigne émise par le mode « Contrôle Continu », soit la vitesse du véhicule automobile est strictement supérieure à un premier seuil de vitesse prédéterminé (($Pedacc > seuil\_ped$ ET $Cd\_CC < Cd$) OU $Vveh > seuil\_vv\_out$). Le mode choisi est alors le mode « Contrôle Continu » 33. Sinon, on passe à l'étape de test suivante 34.

Lors de l'étape 34, on teste l'enfoncement de la pédale d'accélération du véhicule automobile *Pedacc* et la vitesse du véhicule automobile *Vveh.* Si l'enfoncement de la pédale d'accélération du véhicule automobile est inférieur ou égal au seuil prédéterminé d'enfoncement de la pédale d'accélération et, simultanément, si la vitesse du véhicule automobile est strictement inférieure à un second seuil de vitesse prédéterminé ($Pedacc <= seuil\_ped$ ET $Vveh < seuil\_vv\_in$) alors on passe à une étape de test 36 suivante.

Si l'on ne retrouve pas ces conditions alors on conserve le mode en cours 35.

Lors de l'étape 36, on considère l'activité du frein du véhicule automobile *frein.* Si celui-ci est actif (*frein actif*), alors on choisit le mode « Rampage en Couple » 37, sinon on choisit le mode « Rampage en Vitesse » 38.

Les deux seuils de vitesse *seuil\_vv\_in* et *seuil\_vv\_out* prédéterminés et distincts permettent d'éviter les phénomènes d'hystérésis auxquels pourrait être sensible le dispositif c'est-à-dire les phénomènes d'oscillations entre deux modes de fonctionnement du fait de l'oscillation de la valeur d'un paramètre autour d'un seuil prédéterminé.

Classiquement, une courbe d'hystérésis possède deux seuils de déclenchement permettant à une variable de sortie donnée de changer de valeur. En effet, s'il existait un unique seuil de décision, la plus petite variation de la valeur de la variable d'entrée, par exemple du bruit électrique, ferait osciller la variable de sortie entre les deux valeurs.

Aussi, le premier seuil de la courbe d'hystérésis permet à la variable de sortie de changer de valeur si la variable d'entrée décroît, et le second seuil si la variable d'entrée croît, la valeur du second seuil étant plus élevée que celle du premier seuil.

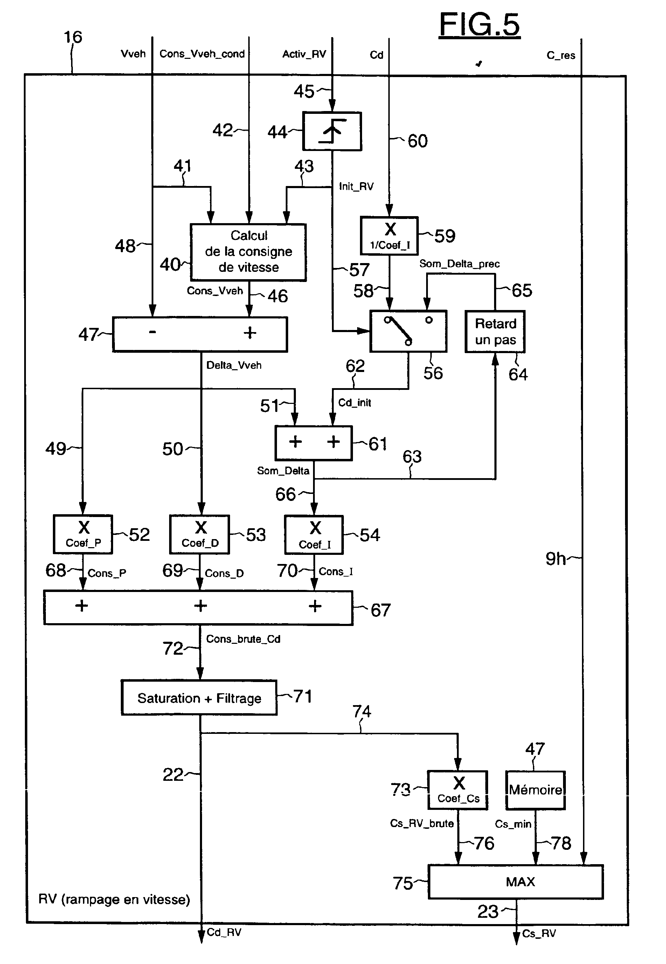

La figure 5 décrit plus particulièrement le module de mode de fonctionnement 16 correspondant au mode « Rampage en Vitesse » présenté sur la figure 1. Ce mode correspond à un avancement au ralenti du véhicule automobile sans activation de la pédale de frein, c'est-à-dire lorsque la vitesse du véhicule automobile est inférieure au second seuil de vitesse prédéterminé et que la consigne de pédale d'accélérateur « Pedacc » est inférieur au seuil « seuil\_ped », comme indiqué sur la figure 4.

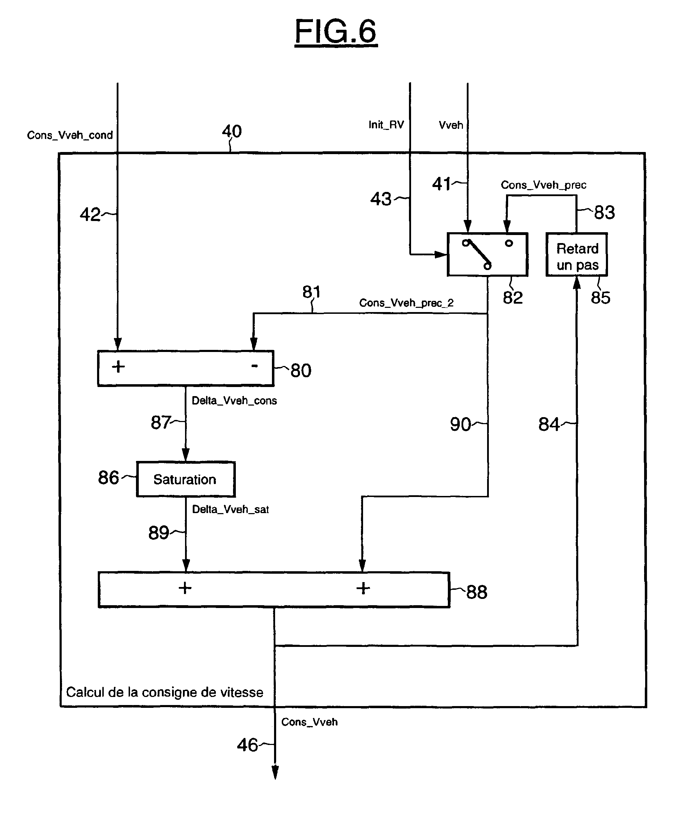

Le module 16 reçoit différents paramètre d'entrée tels que la vitesse mesurée du véhicule automobile notée « Vveh », la consigne de vitesse cible du véhicule automobile, voulue par le conducteur, notée « Cons\_Vveh\_cond ». Le module 16 reçoit également en entrée un signal noté « Activ\_RV » délivré par un logiciel (non représenté) ordonnateur du dispositif, « Activ\_RV » prenant la valeur « 1 » lors de l'activation du mode « RV », tel que représenté sur la courbe « Active\_RV » de la figure 6.

On se réfère à nouveau à la figure 5. Le module 16 reçoit en outre la valeur de la consigne dynamique précédente notée Cd, et un signal noté C\_res, représentatif des couples résistants appliqués à la roue et que le véhicule automobile doit vaincre pour pouvoir se mettre en mouvement.

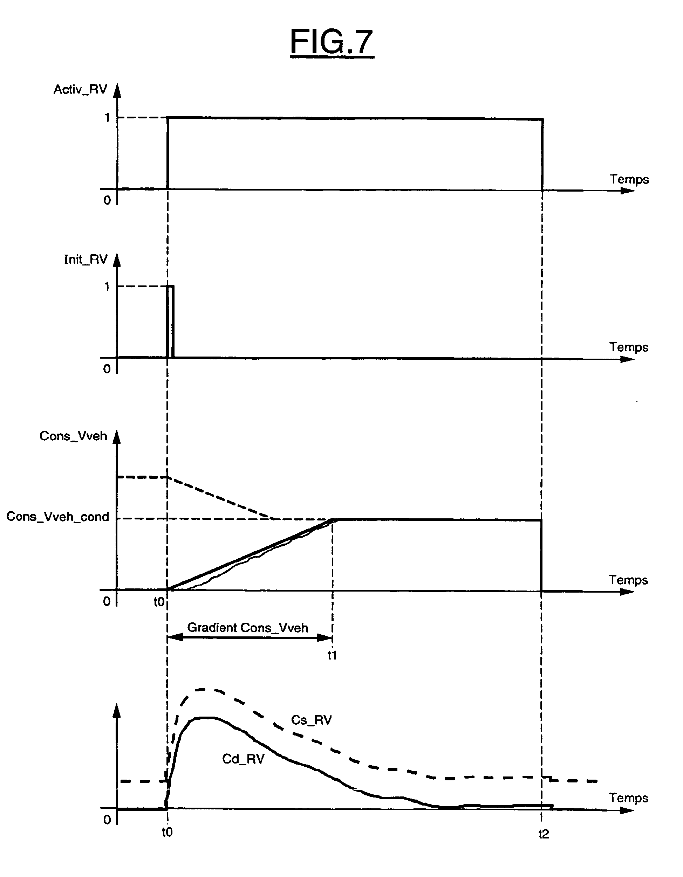

Le module 16 comprend un bloc de calcul 40 (Calcul de la consigne de vitesse) apte à déterminer la consigne de vitesse instantanée « Cons\_Vveh »du véhicule automobile. Le bloc de calcul 40, qui sera décrit plus en détail ci-après, détermine la consigne de vitesse instantanée du véhicule « Cons\_Vveh » à partir de la vitesse du véhicule automobile « Vveh » délivrée par une connexion 41, de la consigne de vitesse finale du véhicule automobile choisie par le conducteur « Cons\_Vveh\_cond » délivrée par une connexion 42, et d'un signal « Init\_RV », délivré par une connexion 43. Le signal « Init\_RV » est un signal d'initialisation élaboré par un module 44 en fonction de la variable « Activ\_RV » délivré au module 44 par une connexion 45. Le module 44 génère un échelon sur un pas de temps lors de l'activation du mode de fonctionnement « RV », c'est-à-dire lorsque la variable « Activ\_RV » passe de la valeur « 0 » à la valeur « 1 ». À l'issue du pas de temps, la variable « Init\_RV » reprend la valeur « 0 ». La figure 7 représente l'évolution de la variable « Init\_RV » en fonction du temps par rapport aux valeurs de la variable « Activ\_RV » également représenté sur la figure 7.

On se réfère à nouveau à la figure 5. Le bloc de calcul 40 délivre la consigne de vitesse instantanée du véhicule automobile « Cons_Vveh » par une connexion 46 à un soustracteur 47. Le soustracteur 47 reçoit également en entrée la vitesse du véhicule automobile « Vveh » par une connexion 48. Le soustracteur 47 calcule l'écart « Delta_Vveh » entre la consigne de vitesse instantanée du véhicule automobile « Cons_Vveh » et la vitesse courante du véhicule automobile « Vveh ».

L'écart « Delta_Vveh » est délivré respectivement par les connexions 49, 50, 51 à trois blocs de correction 52, 53 et 54 après un traitement préalable. Les trois blocs 52, 53 et 54 sont aptes à effectuer un asservissement dit PID, c'est-à-dire un asservissement proportionnel, intégral, dérivé. Le bloc 52 permet d'effectuer un asservissement proportionnel en appliquant un coefficient Coef_P. L'asservissement proportionnel permet au système de converger plus vite vers sa valeur finale. Cependant, la vitesse du moteur n'atteint jamais la vitesse désirée. Cette marge représente l'erreur statique. Elle correspond à la différence entre la vitesse réelle et la vitesse désirée en régime établi, c'est-à-dire une fois que le système est stabilisé. Pour compenser cette erreur statique, on effectue un asservissement intégral.

Cet asservissement intégral est effectué par le bloc 54. La correction effectuée par le bloc 54 sert principalement à supprimer l'erreur statique en appliquant un coefficient Coef_I. Le principe de la correction intégrale consiste à intégrer l'erreur depuis le début et à ajouter cette erreur à la consigne jusqu'à ce qu'elle devienne nulle. Lorsque cette erreur est nulle, le terme « intégrale » se stabilise et il compense parfaitement l'erreur entre la consigne et la vitesse réelle. Afin de diminuer l'erreur statique initiale, et d'éviter ainsi un saut de couple trop important, le module 16 comprend des premiers moyens d'initialisation du bloc de correction intégrale 54. Les premiers moyens d'initialisation comprennent un sélecteur 56. Le sélecteur 56 est commandé par le signal « Init_RV » délivré par une connexion 57. Le sélecteur 56 reçoit en entrée, par une connexion 58, une valeur d'initialisation délivrée par un bloc 59. Cette valeur d'initialisation est égale à la dernière valeur du couple dynamique à appliquer à la roue Cd, délivrée au bloc 59 par une connexion 60. Le bloc 59 multiplie cette valeur d'initialisation par un coefficient égal à l'inverse du coefficient « Coef_I ». Ainsi, lorsque la variable « Init_RV » prend la valeur « 1 », le bloc 56 délivre à un additionneur 61, par une connexion 62, une variable « Cd_Init ».

Durant cette période d'initialisation, la variable « Som_Delta » est alors égale à : *Som_Delta=Delta_Vveh+(Cd/Coef_I).*

L'additionneur 61 reçoit également en entrée, par une connexion 51, la variable « Delta_Vveh », issue du bloc 47. L'additionneur 61 calcule alors une variable « Som_Delta », égale à la somme entre la variable « Delta_Vveh » et la variable « Cd_init ».

La variable « Som_Delta » est délivrée, par une connexion 63, à un moyen de retard 64. Ce moyen de retard 64 élabore une variable « Som_Delta_prec » qui est égale à la variable « Som_Delta » retardée d'un pas de temps. La variable « Som_Delta_prec » est délivrée par une connexion 65 au sélecteur 56. Ainsi, lorsque la variable « Init_RV » est égale à « 0 », la variable « Cd_init » délivrée par le bloc 56 est égale à « Som_Delta_prec », en dehors de la période d'initialisation.

En outre, la variable « Som_Delta », est délivrée par une connexion 66 au bloc de correction 54, de la même façon que la variable « Delta_Vveh » est délivrée aux blocs de correction 52 et 53.

Le troisième bloc de correction 53 est utilisé pour effectuer un asservissement dit « dérivé ». Pour ce faire, le bloc de correction 53 applique un coefficient « Coef_D » à la consigne « Delta_Vveh », délivrée par la connexion 50. Cette correction dérivée permet de diminuer le dépassement et les oscillations générés par la correction intégrale effectué par le bloc 54.

Les trois blocs de correction 52, 53 et 54 délivrent respectivement des consignes de couple à appliquer à la roue corrigée respectivement « Cons_P », « Cons_D », « Cons_I », telles que :

$$Cons\_P = Coef\_P * Delta\_Vveh \,,$$

$$Cons\_D = Coef\_D * Delta\_Vveh \,,$$

$$Cons\_I = Coef\_I * Som\_Delta \,.$$

Ces consignes de couple sont délivrées à un additionneur 67 respectivement par les connexions 68, 69, 70. L'additionneur 67 élabore alors une consigne de couple brute « Cons_brute_Cd ». La consigne « Cons_brute_Cd » est délivrée à un bloc 71 de saturation et de filtrage. La consigne « Cons_brute_Cd » est délivrée au bloc 71 par une connexion 72. La saturation effectuée par le bloc 71 permet d'éviter que la consigne « Cd_RV » ne prenne des valeurs de dehors de valeurs limites prédéfinies. Le bloc 71 effectue également un filtrage temporel afin d'éviter des variations brusques de couple.

Le bloc 71 délivre en sortie la consigne de couple dynamique à appliquer à la roue « Cd_RV ».

Sur la figure 5, le module 16 comprend également des moyens afin d'élaborer la composante statique de la consigne « Cs_RV » en mode « RV », à partie de la consigne « Cd_RV ».

À cet effet, il comprend un bloc 73 élaborant une consigne « Cs_RV_brute » à partir de la composante dynamique de la consigne « Cd_RV » transmise par une connexion 74 au bloc 73. Le bloc 73 élabore la composante statique « Cs_RV_brute » en multipliant la consigne « Cd_RV » par un coefficient « Coef_Cs », représentant une réserve souhaitée de couple à appliquer à la roue.

Un bloc 75 (MAX) reçoit en entrée la consigne « Cs_RV_brute » par une connexion 76, ainsi qu'une constante « Cs-min » délivrée au module 75 par une mémoire (Mémoire) 77, par l'intermédiaire d'une connexion 78. La constante « Cs-min » représente une quantité minimale de couple à appliquer à la roue. Le bloc 75 reçoit également en entrée par la connexion 9h, le signal « C_res » représentatif des couples résistants appliqués à la roue afin de permettre un redécollage immédiat du véhicule automobile. Le bloc 75 élabore la composante statique « Cs_RV » en prenant le maximum des trois signaux reçus en entrée, « Cs_RV_brute », « Cs-min » et « C_res ».

On se réfère à présent à la figure 6. La figure 6 décrit plus en détail le bloc 40 apte à calculer la consigne de vitesse « Cons_Vveh ». Le bloc 40 comprend un soustracteur 80 qui effectue la différence entre la consigne « Cons_Vveh_cond » délivrée par la connexion 42 au bloc 40 et une consigne intermédiaire « Cons_Vveh_Prec_2 » délivrée par une connexion 81 au bloc 80.

La consigne intermédiaire « Cons_Vveh_Prec_2 » est issue de seconds moyens d'initialisation compris dans le bloc 40. Les seconds moyens d'initialisation comprennent un sélecteur 82 commandé par le signal d'initialisation « Init_RV » délivré par la connexion 43. Le sélecteur 82 reçoit en entrée la vitesse du véhicule automobile « Vveh », délivrée par la connexion 41. Lorsque le signal de commande « Init_RV » prend la valeur « 1 », la variable intermédiaire « Cons_Vveh_Prec_2 » prend alors la valeur de la vitesse du véhicule automobile « Vveh ». Sinon, lorsque la valeur de la variable d'initialisation « Init_RV » est égale à « 0 », le bloc 82 délivre alors une variable « Cons_Vveh_Prec » que le bloc 82 reçoit également en entrée par une connexion 83.

La consigne « Cons_Vveh_Prec » est délivrée par un moyen de retard 85. Le moyen de retard 85 élabore la consigne « Cons_Vveh_Prec » à partir de la consigne de vitesse instantanée « Cons_Vveh » délivrée au moyen de retard 85, par une connexion 84.

Le soustracteur 80 effectue alors la différence entre la consigne de vitesse élaborée par le conducteur « Cons_Vveh_Cond » et la variable intermédiaire « Cons_Vveh_Prec_2 » égale à la vitesse du véhicule automobile lorsque la variable de commande « Init_RV » est égale à « 1 », ou à la consigne de vitesse instantanée « Cons_Vveh » retardée d'un pas temporel lorsque la commande d'initialisation « Init_RV » est égale à « 0 », autrement dit « Cons_Vveh_Prec ».

L'écart « Delta_Vveh_Cons » élaboré par le soustracteur 80 est délivré à un bloc de saturation 86 par une connexion 87. Le bloc 86 sature l'écart « Delta_Vveh_Cons » de manière à ce que la consigne de vitesse instantanée « Cons_Vveh » soit limitée à des valeurs minimales et maximales calibrables. Ce mécanisme permet d'amener progressivement la consigne « Cons_Vveh » à la consigne demandée par le conducteur « Cons_Vveh_cond ». Le bloc 86 délivre alors une consigne saturée « Delta_Vveh_sat ».

Un additionneur 88 reçoit en entrée la consigne « Delta_Vveh_sat » par une connexion 89. L'additionneur 88 additionne la consigne « Delta_Vveh_sat » à la valeur intermédiaire « Cons_Vveh_Prec_2 » délivrée au bloc 88 par une connexion 90. L'additionneur 88 délivre alors, par la connexion 46, la consigne de vitesse instantanée « Cons_Vveh » remise à jour.

On se réfère à présent à la figure 7.

La figure 7 reprend l'évolution des consignes « Cd_RV » et « Cs_RV » du mode de fonctionnement « RV ».

L'instant t0 correspond au passage à la valeur « 1 » de la variable « Activ_RV », représenté sur la première courbe. À l'instant t0, la variable « Init_RV », représenté sur la deuxième courbe, prend la valeur « 1 » pour un pas de temps temporel.

Sur la troisième courbe, on observe l'évolution de la consigne de la vitesse instantanée « Cons_Vveh ». Durant le pas de temps temporel où la variable « Init_RV » prend la valeur « 1 », la consigne de vitesse instantanée est initialisée à la valeur de la vitesse du véhicule automobile. On a tracé en trait plein le cas où la vitesse initiale du véhicule automobile est nulle. On a tracé en traits pointillés le cas où la vitesse instantanée du véhicule automobile est supérieure à la consigne de vitesse élaborée par le conducteur.

Entre les instants t0 et t1, le gradient de la consigne de vitesse instantanée, c'est-à-dire la différence entre la consigne de vitesse élaborée par le conducteur et la consigne de vitesse instantanée, diminue jusqu'à rejoindre finalement la consigne de vitesse élaborée par le conducteur, « Cons_Vveh_cond ». La courbe de la vitesse du véhicule automobile « Vveh » dans le cas où la vitesse initiale du véhicule automobile est nulle, représentée en trait fin sur la troisième courbe, suit alors la consigne de vitesse instantanée.

La quatrième courbe de la figure 7 représente l'évolution des consignes de couple dynamique Cd et statique Cs en mode « Rampage en Vitesse ». Ces consignes de couple évoluent en fonction des variations de consigne de vitesse jusqu'à l'instant t2 où l'on quitte le mode « Rampage en Vitesse ».

L'élaboration de la composante dynamique « Cd_RV » de la consigne en mode « RV » offre plusieurs avantages. Elle permet par exemple de faire avancer le véhicule indépendamment de sa charge et/ou de la pente de la route. En outre, le véhicule automobile peut maintenir une vitesse comprise entre la vitesse nulle et la seconde vitesse de seuil *seuil_VV_in* qui peut être de l'ordre de 6 à 10 km/h selon le type de véhicule automobile. De ce fait, le mode « Rampage en Vitesse» est particulièrement bien adapté dans le cas où le conducteur du véhicule automobile effectue un suivi de file de véhicules.

**Revendications**

**1.** Procédé de commande d'une transmission automatisée d'un groupe motopropulseur pour un véhicule automobile, comprenant une étape d'élaboration d'un signal de consigne d'une variable à appliquer aux roues du véhicule automobile, ladite consigne comprenant une composante dynamique (Cd) et une composante statique (Cs) élaborées en tenant compte de données d'entrée représentatives des caractéristiques du véhicule automobile, de la volonté du conducteur et de l'environnement du véhicule automobile, **caractérisé en ce que** l'on sélectionne, en fonction desdites données d'entrée, un mode parmi au moins deux modes de fonctionnement différents, capables de délivrer ledit signal de consigne, l'un des deux modes de fonctionnement correspondant à un mode dit « Rampage en Vitesse» apte à délivrer ledit signal de consigne lorsque le véhicule automobile avance à une vitesse inférieure à un seuil prédéterminé et que la pédale de frein du véhicule automobile est inactivée, le mode « Rampage en Vitesse » et/ou la valeur de la consigne délivrée lorsque ledit mode « Rampage en Vitesse » est sélectionné, étant déterminés en fonction d'un signal représentatif de la composante dynamique de la consigne en cours d'application.

**2.** Procédé selon la revendication 1, **caractérisé par le fait que** le mode « Rampage en Vitesse » et/ou la valeur de la consigne délivrée lorsque ledit mode « Rampage en Vitesse » est sélectionné, sont déterminés en fonction d'un signal représentatif d'une vitesse mesurée (Vveh), et/ou d'un signal représentatif d'une vitesse cible que le véhicule automobile doit atteindre (Cons_Vveh_cond).

**3.** Procédé selon la revendication 2, **caractérisé par le fait que** le mode « Rampage en Vitesse » et/ou la valeur de la consigne délivrée lorsque ledit mode « Rampage en Vitesse » est sélectionné, sont déterminés en fonction d'un signal représentatif des couples résistants (C_res) appliqués à la roue et que le véhicule automobile doit vaincre pour pouvoir se mettre en mouvement.

**4.** Dispositif de commande d'une transmission automatisée d'un groupe motopropulseur pour un véhicule automobile, apte à délivrer des signaux de consigne d'une variable à appliquer aux roues du véhicule automobile, ladite consigne comprenant une composante dynamique (Cd) et une composante statique (Cs), élaborées en tenant compte de données d'entrée, délivrées par un bloc d'entrée (1) et comprenant une liste de paramètres définissant les caractéristiques du véhicule automobile, la volonté du conducteur et l'environnement du véhicule automobile, **caractérisé en ce qu'**il comprend un bloc de commande (2) comportant au moins deux modules selon deux modes de fonctionnement distincts et prédéterminés, l'un des modules (16) correspondant à un mode dit « Rampage en Vitesse », sélectionné lorsque le véhicule automobile avance à une vitesse inférieure à un seuil prédéterminé et que la pédale de frein du véhicule automobile est inactivée, un module de sélection (4) recevant les signaux provenant dudit bloc d'entrée (1) et apte à délivrer un signal de sélection (mode) de l'un desdits modules en fonction des données d'entrée, un module (16) correspondant au mode dit « Rampage en Vitesse » apte à déterminer la valeur de la consigne délivrée lorsque ledit mode « Rampage en Vitesse » est sélectionné, en fonction de la composante dynamique de la consigne en cours d'application.

**5.** Dispositif selon la revendication 4, **caractérisé par le fait que** le module (16) destiné au mode de fonctionnement dit « Rampage en Vitesse » comprend :

- un bloc de calcul (40) apte à élaborer une consigne de vitesse (Cons_Vveh) à partir d'une vitesse mesurée (Vveh) du véhicule automobile, d'une consigne de vitesse cible (Cons_Vveh_cond) que le véhicule automobile doit atteindre et d'un signal d'initialisation (Init_RV),
- des moyens de correction (52, 53 et 54) aptes à effectuer une correction proportionnelle et/ou intégrale et/ou dérivée sur la consigne de vitesse élaborée par le premier bloc (40), et à délivrer chacun une consigne de couple corrigée (Cons_P, Cons_D, Cons_I),
- des premiers moyens d'initialisation et d'adaptation de la consigne de vitesse devant être corrigée par le moyen de correction effectuant la correction intégrale (54), en fonction du signal d'initialisation (init_RV) et de la valeur d'une consigne dynamique de couple en cours d'application,
- un filtre (71) apte à saturer et filtrer une consigne de couple dynamique brute en mode « Rampage en Vitesse » élaborée à partir des consignes de couple corrigées par les moyens de correction (Cons_P, Cons_D, Cons_I),
- des moyens pour effectuer des opérations sur les variables délivrées par les blocs compris dans le module destiné au mode de fonctionnement dit « Rampage en Vitesse »,
- des moyens pour délivrer la consigne de couple statique en mode « Rampage en Vitesse > (Cs_RV) à partir de la valeur de la consigne de couple dynamique en mode « Rampage en Vitesse » (Cd_RV), une quantité minimale de couple à appliquer à la roue (Cs_min), et un signal représentatif des couples résistants appliqués à la roue (C_res) et que le véhicule automobile doit vaincre pour pouvoir se mettre en mouvement.

6. Dispositif selon la revendication 5, **caractérisé par le fait que** le bloc de calcul comprend :

> - des seconds moyens d'initialisation apte à initialiser une variable intermédiaire (Cons_Vveh_prec_2) avec la valeur de la vitesse mesurée (Vveh) du véhicule automobile ou la valeur de la consigne de vitesse élaborée par le bloc de calcul au pas de temps précédent (Cons_Vveh_prec),
> - des moyens de saturation (86), apte à réduire l'écart entre la vitesse cible souhaitée par le conducteur (Cons_Vveh_cond) et la variable intermédiaire (Cons_Vveh_prec_2),
> - des moyens pour effectuer des opérations sur les variables délivrées par les blocs compris dans le bloc de calcul (40).

**Claims**

1. Method of controlling an automated transmission of a power train for a motor vehicle, comprising a step of formulating a setpoint signal of a variable to be applied to the wheels of the motor vehicle, said setpoint comprising a dynamic component (Cd) and a static component (Cs) formulated by taking account of input data representative of the characteristics of the motor vehicle, of the desire of the driver and of the environment of the motor vehicle, **characterized in that**, as a function of said input data, a mode is selected from among at least two different operating modes, capable of delivering said setpoint signal, one of the two operating modes corresponding to a mode termed "Speed Creeping" able to deliver said setpoint signal when the motor vehicle advances at a speed less than a predetermined threshold and when the brake pedal of the motor vehicle is inactivated, the "Speed Creeping" mode and/or the value of the setpoint delivered when said "Speed Creeping" mode is selected, being determined as a function of a signal representative of the dynamic component of the setpoint undergoing application.

2. Method according to Claim 1, **characterized in that** the "Speed Creeping" mode and/or the value of the setpoint delivered when said "Speed Creeping" mode is selected, are determined as a function of a signal representative of a measured speed (Vveh) and/or of a signal representative of a target speed that the motor vehicle must reach (Cons_Vveh_cond).

3. Method according to Claim 2, **characterized in that** the "Speed Creeping" mode and/or the value of the setpoint delivered when said "Speed Creeping" mode is selected, are determined as a function of a signal representative of the resistive torques (C_res) applied to the wheel and that the motor vehicle must overcome so as to be able to move off.

4. Device for controlling an automated transmission of a power train for a motor vehicle, able to deliver setpoint signals of a variable to be applied to the wheels of the motor vehicle, said setpoint comprising a dynamic component (Cd) and a static component (Cs), formulated by taking account of input data, delivered by an input block (1) and comprising a list of parameters defining the characteristics of the motor vehicle, the desire of the driver and the environment of the motor vehicle, **characterized in that** it comprises:

> - a control block (2) comprising at least two modules according to two distinct and predetermined operating modes, one of the modules (16) corresponding to a mode termed "Speed Creeping", selected when the motor vehicle advances at a speed less than a predetermined threshold and when the brake pedal of the motor vehicle is inactivated,
> - a selection module (4) receiving the signals originating from said input block (1) and able to deliver a selection signal (mode) for one of said modules as a function of the input data,
> - a module (16) corresponding to the mode termed "Speed Creeping" able to determine the value of the setpoint delivered when said "Speed Creeping" mode is selected, as a function of a signal representative of the dynamic component of the setpoint undergoing application.

5. Device according to Claim 4, **characterized in that** the module (16) intended for the operating mode termed "Speed Creeping" comprises:

> - a calculation block (40) able to formulate a speed setpoint (Cons_Vveh) on the basis of a measured speed (Vveh) of the motor vehicle, of a target speed setpoint (Cons_Vveh_cond) that the motor vehicle must reach and of an initialization signal (Init_RV),
> - correction means (52, 53 and 54) able to perform a proportional and/or integral and/or derivative correction on the speed setpoint formulated by the first block (40), and to each deliver a corrected torque setpoint (Cons_P, Cons_D, Cons_I),
> - first means for initializing and adapting the speed setpoint to be corrected by the correction means performing the integral correction (54), as a function of the initialization signal (Init_RV) and of the value of a dynamic torque setpoint undergoing application,
> - a filter (71) able to saturate and filter a raw dynamic torque setpoint in "Speed Creeping" mode formulated on the basis of the torque setpoints corrected by the correction means (Cons_P, Cons_D, Cons_I),

- means for performing operations on the variables delivered by the blocks included in the module intended for the operating mode termed "Speed Creeping",

- means for delivering the static torque setpoint in "Speed Creeping" mode (Cs_RV) on the basis of the value of the dynamic torque setpoint in "Speed Creeping" mode (Cd_RV), a minimum torque quantity to be applied to the wheel (Cs_min), and a signal representative of the resistive torques applied to the wheel (C_res) and that the motor vehicle must overcome so as to be able to move off.

6. Device according to Claim 5, **characterized in that** the calculation block comprises,

- second initialization means able to initialize an intermediate variable (Cons_Vveh_prec_2), with the value of the measured speed (Vveh) of the motor vehicle or the value of the speed setpoint formulated by the calculation block at the previous time step (Cons_Vveh_prec),

- saturation means (86), able to reduce the deviation between the target speed desired by the driver (Cons_Vveh_cond) and the intermediate variable (Cons_Vveh_prec_2),

- means for performing operations on the variables delivered by the blocks included in the calcualation block (40).

## Patentansprüche

1. Verfahren zur Steuerung eines automatisierten Getriebes einer Antriebseinheit für ein Kraftfahrzeug, das einen Schritt der Erarbeitung eines Sollwertsignals einer an die Räder des Kraftfahrzeugs anzuwendenden Variablen enthält, wobei der Sollwert eine dynamische Komponente (Cd) und eine statische Komponente (Cs) enthält, die unter Berücksichtigung von Eingangsdaten erarbeitet werden, welche für die Daten des Kraftfahrzeugs, den Fahrerwillen und die Umgebung des Kraftfahrzeugs repräsentativ sind, **dadurch gekennzeichnet, dass** in Abhängigkeit von den Eingangsdaten eine von mindestens zwei verschiedenen Betriebsarten gewählt wird, die fähig sind, das Sollwertsignal zu liefern, wobei eine der zwei Betriebsarten einer Betriebsart des so genannten "Geschwindigkeit-Kriechen" entspricht, die das Sollwertsignal liefern kann, wenn das Kraftfahrzeug sich mit einer Geschwindigkeit geringer als ein vorbestimmter Schwellwert fortbewegt und das Bremspedal des Kraftfahrzeugs nicht aktiviert ist, wobei die Betriebsart "Geschwindigkeit-Kriechen" und/oder die Größe des Sollwerts, der geliefert wird, wenn die Betriebsart "Geschwindigkeit-Kriechen" gewählt wird, in Abhängigkeit von einem Signal bestimmt werden, das für die dynamische Komponente des gerade angelegten Sollwerts repräsentativ ist.

2. Verfahren nach Anspruch 1, **dadurch gekennzeichnet, dass** die Betriebsart "Geschwindigkeit-Kriechen" und/oder die Größe des Sollwerts, der geliefert wird, wenn die Betriebsart "Geschwindigkeit-Kriechen" gewählt wird, in Abhängigkeit von einem Signal, das für eine gemessene Geschwindigkeit (Vveh) repräsentativ ist, und/oder von einem Signal bestimmt werden, das für eine Zielgeschwindigkeit repräsentativ ist, die das Kraftfahrzeug erreichen soll (Cons_Vveh_cond).

3. Verfahren nach Anspruch 2, **dadurch gekennzeichnet, dass** die Betriebsart "Geschwindigkeit-Kriechen" und/oder die Größe des Sollwerts, der geliefert wird, wenn die Betriebsart "Geschwindigkeit-Kriechen" gewählt wird, in Abhängigkeit von einem Signal bestimmt werden, das für die Widerstandsmomente (C_res) repräsentativ ist, die an das Rad angewendet werden und die das Kraftfahrzeug überwinden muss, um sich in Bewegung setzen zu können.

4. Vorrichtung zur Steuerung eines automatisierten Getriebes einer Antriebseinheit für ein Kraftfahrzeug, die Sollwertsignale einer Variablen liefern kann, die an die Räder des Kraftfahrzeugs anzuwenden ist, wobei der Sollwert eine dynamische Komponente (Cd) und eine statische Komponente (Cs) enthält, die unter Berücksichtigung von Eingangsdaten erarbeitet werden, die von einem Eingangsblock (1) geliefert werden und eine Liste von Parametern enthalten, die die Daten des Kraftfahrzeugs, den Fahrerwillen und die Umgebung des Fahrzeugs definieren, **dadurch gekennzeichnet, dass** sie enthält:

einen Steuerblock (2), der mindestens zwei Module entsprechend zwei unterschiedlichen und vorbestimmten Betriebsarten aufweist, wobei eines der Module (16) einer Betriebsart "Geschwindigkeit-Kriechen" entspricht, die gewählt wird, wenn das Kraftfahrzeug sich mit einer Geschwindigkeit unter einem vorbestimmten Schwellwert fortbewegt und wenn das Bremspedal des Kraftfahrzeugs nicht aktiviert ist, ein Auswahlmodul (4), das die vom Eingangsblock (1) kommenden Signale empfängt und ein Auswahlsignal (mode) eines der Module in Abhängigkeit von den Eingangsdaten liefern kann, ein der Betriebsart "Geschwindigkeit-Kriechen" entsprechendes Modul (16), das die Größe des Sollwerts, der geliefert wird, wenn die Betriebsart "Geschwindigkeit-Kriechen" gewählt wird, in Abhängigkeit von der dynamischen Komponente des gerade angelegten Sollwerts bestimmen kann.

5. Vorrichtung nach Anspruch 4, **dadurch gekennzeichnet, dass** das für die Betriebsart "Geschwindigkeit-Kriechen" bestimmte Modul (16) enthält:

   - einen Rechenblock (40), der einen Geschwindigkeitssollwert (Cons_Vveh) ausgehend von einer gemessenen Geschwindigkeit (Vveh) des Kraftfahrzeugs, einem Sollwert der Zielgeschwindigkeit (Cons_Vveh_cond), die das Kraftfahrzeug erreichen soll, und einem Initialisierungssignal (Init_RV) erarbeiten kann,
   - Korrektureinrichtungen (52, 53 und 54), die eine proportionale und/oder integrale und/oder von dem vom ersten Block (40) erarbeiteten Geschwindigkeitssollwert abgeleitete Korrektur durchführen und jede einen korrigierten Drehmomentsollwert (Cons_P, Cons_D, Cons_I) liefern können,
   - erste Einrichtungen zur Initialisierung und Anpassung des durch die Korrektureinrichtung zu korrigierenden Geschwindigkeitssollwerts, die die integrale Korrektur (54) in Abhängigkeit vom Initialisierungssignal (init_RV) und von der Größe eines dynamischen Drehmomentsollwerts durchführen, der gerade angelegt wird,
   - ein Filter (71), das einen dynamischen Rohdrehmomentsollwert in der Betriebsart "Geschwindigkeit-Kriechen" sättigen und filtern kann, der ausgehend von den von den Korrektureinrichtungen (Cons_P, Cons_D, Cons_I) korrigierten Drehmomentsollwerten erarbeitet wird,
   - Einrichtungen, um Vorgänge an den von den in dem für die Betriebsart "Geschwindigkeit-Kriechen" bestimmten Modul enthaltenen Blöcken gelieferten Variablen durchzuführen,
   - Einrichtungen, um den statischen Drehmomentsollwert in der Betriebsart "Geschwindigkeit-Kriechen" (Cs_RV) ausgehend von der Größe des dynamischen Drehmomentsollwerts in der Betriebsart "Geschwindigkeit-Kriechen" (Cd_RV), eine an das Rad anzuwendende Mindestdrehmomentmenge (Cs_min), und ein für die an das Rad angewendeten Widerstandsmomente (C_res), die das Kraftfahrzeug überwinden muss, um sich in Bewegung setzen zu können, repräsentatives Signal zu liefern.

6. Vorrichtung nach Anspruch 5, **dadurch gekennzeichnet, dass** der Rechenblock enthält:

   - zweite Initialisierungseinrichtungen, die eine Zwischenvariable (Cons_Vveh_prec_2) mit der Größe der gemessenen Geschwindigkeit (Vveh) des Kraftfahrzeugs oder mit der Größe des vom Rechenblock im vorhergehenden Zeitschritt erarbeiteten Geschwindigkeitssollwerts (Cons_Vveh_prec) initialisieren können,
   - Sättigungseinrichtungen (86), die die Abweichung zwischen der vom Fahrer gewünschten Zielgeschwindigkeit (Cons_Vveh_cond) und der Zwischenvariablen (Cons_Vveh_prec_2) reduzieren können,
   - Einrichtungen, um Vorgänge an den von den im Rechenblock (40) enthaltenen Blöcken gelieferten Variablen durchzuführen.

# FIG.1

## FIG.2

8

→ 8a    → 8b    → 8c

IHM

8d    8e    8f

## FIG.3

9

9a    9b    9c    9g

ENV

9d    9e    9f    9h

# FIG.4

# FIG.5

RV (rampage en vitesse)

# FIG.6

Cons_Vveh_cond

40

Init_RV    Vveh

42

43    41

Cons_Vveh_prec

83

Retard
un pas

81    Cons_Vveh_prec_2

82

85

+    −    80

Delta_Vveh_cons

87

90    84

86    Saturation

Delta_Vveh_sat

89

+    +    88

Calcul de la consigne de vitesse

Cons_Vveh

46

# FIG.7

Activ_RV

1

0

Temps

Init_RV

1

0

Temps

Cons_Vveh

Cons_Vveh_cond

0    t0

Temps

Gradient Cons_Vveh

t1

Cs_RV

Cd_RV

0    t0

Temps

t2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2827339 A
- US 5549525 A
- US 4961146 A
- US 2002115529 A
- US 200301171186 A
- EP 1275551 A
- FR 2827339
- US 2004143384 A